Europäisches Patentamt

European Patent Office

Office européen des brevets

(11) Publication number : **0 627 732 A1**

## (12) EUROPEAN PATENT APPLICATION

(21) Application number : 94303464.5

(22) Date of filing : 13.05.94

(51) Int. Cl.[5] : **G11B 5/60,** G11B 17/32,
G11B 21/21

(30) Priority : 04.06.93 US 71787

(43) Date of publication of application :
07.12.94 Bulletin 94/49

(84) Designated Contracting States :
AT BE CH DE DK ES FR GB GR IT LI LU NL SE

(71) Applicant : MAGNEX CORPORATION
6850 Santa Teresa Boulevard
San Jose, California 95119 (US)

(72) Inventor : **Lin, Fong-Jei**
147 Sprucemont Place
San Jose, California 95139 (US)
Inventor : **Zhu, Shengbo**
1072 Minoru Drive
San Jose, California 95120 (US)

(74) Representative : **Beresford, Keith Denis Lewis**
et al
BERESFORD & Co.
2-5 Warwick Court
High Holborn
London WC1R 5DJ (GB)

(54) **Thin film transducer with reduced flying height.**

(57)  A magnetic disk recording system with a combination transducer/slider having reduced effective flying height as measured between the transducer gap and the surface of the recording medium. The slider has a leading end, a trailing end and an air bearing surface extending therebetween. The trailing end is provided with a surface contour which forms a boundary with the air bearing surface near the pole tip region of the transducer. Consequently, the effective flying height of the pole tip region is nearly equal to the flying height of the boundary. The contoured surface can be an angled plane, a transverse notch or a thin overcoat layer with a small angled band. The magnetic transducers may either have flat bottom poles or a bottom pole with a recessed central region.

FIG. 5

BACKGROUND OF THE INVENTION

This invention relates to slider/transducer assemblies which are used in data recording devices. More particularly, this invention relates to magnetic transducer/slider assemblies of the type found in rotating disk drives using magnetic media.

Magnetic disk drives using rotating disk media have long been known and used in the computer field for the storage and retrieval of information. Such drives typically include a mechanism for rotating the disk, a magnetic transducer and an air bearing slider supporting the transducer, a head arm for supporting the air bearing slider with the magnetic transducer closely adjacent the recording surface of the magnetic recording medium, and a device for supporting the head arm and for moving the head arm relative to the recording surface of the magnetic recording medium to ensure correct radial positioning of the transducer over the medium. The air bearing slider is typically formed from a suitable material in the shape of a body having a leading end, a trailing end and one or more rails extending between the leading end and the trailing end. The underside of each rail forms the air bearing surface which supports the slider in a flying attitude above the surface of the magnetic medium when the medium is rotating underneath the slider body.

The magnetic transducer is typically located adjacent the trailing end of the slider body, typically on the trailing surface of the body as shown in U.S. Patent No. 4,894,740 issued January 16, 1990 for "MAGNETIC HEAD AIR BEARING SLIDER". Alternatively, the magnetic transducer is formed on the rear surface of the slider body using photolithographic techniques and batch processing on a substrate composed of the slider body material. Currently, this batch processing version is favored in the industry since it is more economical and capable of producing transducers with the small dimensions required on a reliable basis.

Regardless of whether a discrete transducer/slider assembly or a batch processed transducer/slider is employed, in both cases the exposed surface of the transducer is typically coated with a relatively thick protective layer prior to finishing and installation in the head arm support mechanism. In batch processed transducer/slider assemblies, this protective layer is termed the "overcoat" layer and is usually composed of silicon dioxide, A1203, silicon nitride or some other suitable material. This overcoat layer is initially formed to a larger thickness than that desired in the finished product, and is subsequently lapped to a flat finish having a thickness on the order of about 40 microns (1,000 microinches).

When installed and in use, the motion of the air underneath the slider body resulting from revolution of the magnetic disk causes the transducer/slider assembly to fly above the surface of the magnetic disk, and the information is recorded onto the magnetic surface or read from the magnetic surface over the air gap between the surface of the disk and the transducer.

Over time, magnetic disk drives have been continuously improved to provide ever increasing information storage capability with ever decreasing physical size for the disk. This has required substantially narrower track widths on the disk to provide more tracks per inch and substantially lower gap depths for the magnetic transducers to provide an increasing number of bits per inch, both of which are functions of the head design. In addition, improved magnetic media having higher oersted capacity, higher recording frequencies and higher disk angular speeds have all been used to achieve the goal of higher information density in a given area. To achieve this goal, it has also been necessary to reduce the flying height of the transducer above the disk to reduce the average distance between the transducer and the disk media surface. The practical lower limit on the flying height is largely dictated by the surface smoothness of the disk media, with the value of about 3 micro inches being typical today.

Several techniques have been used for reducing the flying height of the transducer/slider assembly. Initially, the width of the rails was reduced since the flying height is dependent to a great extent on the area of the air bearing surface. This solution is limited by the minimum physical size of the transducer, i.e., the width of the rail must equal the maximum width of the transducer. A different technique for reducing the flying height of the slider employs triaxial air bearing surfaces of the type shown in the above-referenced '740 patent. Another technique employs a transverse pressure contour principle in which a slider body having two rails is modified by cutting longitudinally extending slots on the outer rails to reduce the width of the air bearing surface. Since the longitudinal slots are cut after the transducer has been finished on the trailing end surface of the slider body, this technique is limited by the width of the narrowest portion transducer in the pole tip region, which cannot be invaded during the slot forming process. Still another technique employs a negative pressure air bearing surface in which a pair of longitudinally extending rails are joined by a cross rail to modify the aerodynamic characteristics of the slider body.

Each of the above solutions to the problem of reducing the flying height to the acceptable minimum dictated by the media surface smoothness suffers from the disadvantage of requiring special processing steps in order to provide the modified contour. In addition, none of these solutions takes into account the fact that the transducing region, which is the pole tip region in a magnetic transducer, is actually located forward of the trailing end surface of the slider body by an amount equal to the thickness of the overcoat protective layer plus the spacing between the inner boundary of the overcoat layer and the position of the pole tip region. Since sliders are aerodynamically designed to fly at an inclined angle to a plane parallel to the surface of the recording media, the low point of the slider body is the edge between the air bearing surface and the trailing end surface. Consequently, the transducer actually flies higher above the surface of the magnetic media by a substantial amount. As a consequence, the magnetic coupling between the transducer and the recording media suffers.

SUMMARY OF THE INVENTION

The invention comprises a method and apparatus for reducing the flying height of a transducer mounted on a slider body above the surface of the recording media which is relatively simple to implement in either discrete or batch processed slider/transducer, and which provides a substantial improvement in the magnetic coupling between the transducer and the recording media.

In its broadest aspect, the invention comprises a slider/transducer assembly having a slider body and a transducer, the slider body having a leading end, a trailing end and an air bearing surface located intermediate the leading end and the trailing end. The transducer has a transducing region located adjacent the trailing end of the slider body, and the trailing end of the slider body is provided with a contoured surface portion forming a boundary with the air bearing surface which is located closely adjacent the transducing region.

The contoured surface portion of the trailing end may take on several forms. In one embodiment, the contoured surface portion is a substantially planar surface extending from the boundary at an angle with respect to the air bearing surface. In an alternate embodiment, the contoured surface portion comprises a notch extending rearwardly of the boundary to the trailing end surface. In still another embodiment, the contoured surface portion comprises a thin overcoat layer formed over the transducer, the layer including a substantially planar angled sub-portion extending rearwardly of the boundary at an angle with respect to the air bearing surface.

The transducer may comprise a magnetic transducer including a top pole having a main body portion with an upper surface and a bottom pole, with each pole having a pole tip defining a pole tip region spaced from the upper surface of the top pole main body portion. In this particular embodiment, the boundary lies between the upper surface of the top pole and the pole tip region. The bottom pole may have a bottom surface also spaced from the pole tip region.

In a more specific aspect, the invention comprises a slider body and a magnetic transducer, the slider body having a leading end, a trailing end and an air bearing surface located intermediate the leading end and the trailing end. The magnetic transducer includes top and bottom poles each having a pole tip, the pole tips defining a pole tip region terminating at a portion of the air bearing surface adjacent the trailing end of the slider body. The top pole has a main body region with a top surface portion spaced from the pole tip region. The trailing end of the slider body is alternatively provided with an angled, contoured or notched surface forming a boundary with the air bearing surface, the boundary lying in a region between the top surface portion of the top pole of the transducer and the pole tip region. In a specific embodiment of the contoured surface, a thin overcoat layer is provided over the top pole, and the portion of the thin overcoat layer covering the top pole tip includes an angled portion terminating at the boundary. In the notch embodiment, the trailing end of the slider body comprises an end surface which is preferably substantially planar and the notch extends from the end surface to the boundary.

For a fuller understanding of the nature and advantages of the invention, reference should be had to the ensuing detailed description taken in conjunction with the accompanying drawings.

BRIEF DESCRIPTION OF THE DRAWINGS

Fig. 1 is a schematic perspective view of a magnetic disk storage system incorporating the invention;
Fig. 2 is a side elevation view of a prior art slider shown in the flying attitude;
Fig. 3 is an enlarged detail view illustrating the geometry of the trailing end of the flying slider of Fig. 2;
Fig. 4 is a perspective view of a first embodiment of the invention;
Fig. 5 is a side view of the embodiment of Fig. 4;
Fig. 6 is a perspective view of a second embodiment of the invention;
Fig. 7 is a side view of the embodiment of Fig. 6;
Fig. 8 is an enlarged view partially in section of another embodiment of the invention;
Figs. 9 and 10 illustrate the embodiment of Fig. 8 in various steps of production; and
Fig. 11 is a side view partially in section of another embodiment of the invention.

DESCRIPTION OF THE PREFERRED EMBODIMENTS

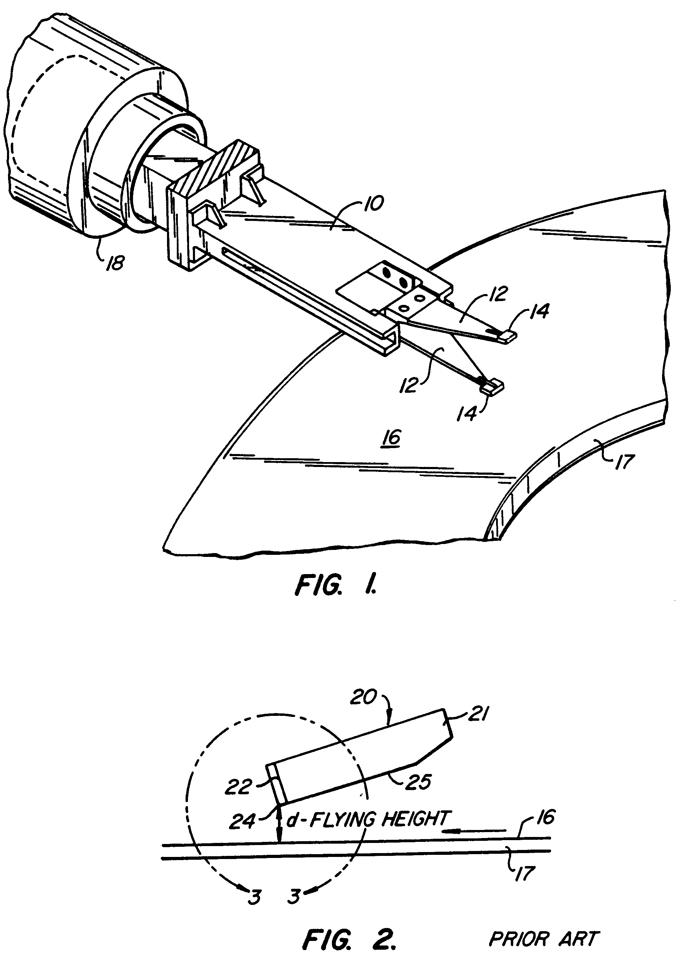

Turning now to the drawings, Fig. 1 illustrates in schematic perspective form a magnetic disk storage system incorporating the invention. As seen in this Fig., the disk storage system includes a magnetic head arm 10 to which a pair of magnetic head suspension assemblies 12 are attached: one to the top of the head arm 10 and the other to the bottom of the head arm 10. Each suspension assembly 12 supports at its end a transducer/slider assembly 14 comprising a slider body and a transducer disposed in such a manner that the transducing gap can be positioned in transducing relation with a magnetic recording surface 16 positioned on a rotatable disk 17. Electrical signals are coupled between the transducers and the follow-on electronic circuitry by conductor leads not shown. Head arm 10 is attached to a conventional actuator 18 such as a voice coil motor for positioning the magnetic heads accurately with respect to various tracks on the disk.

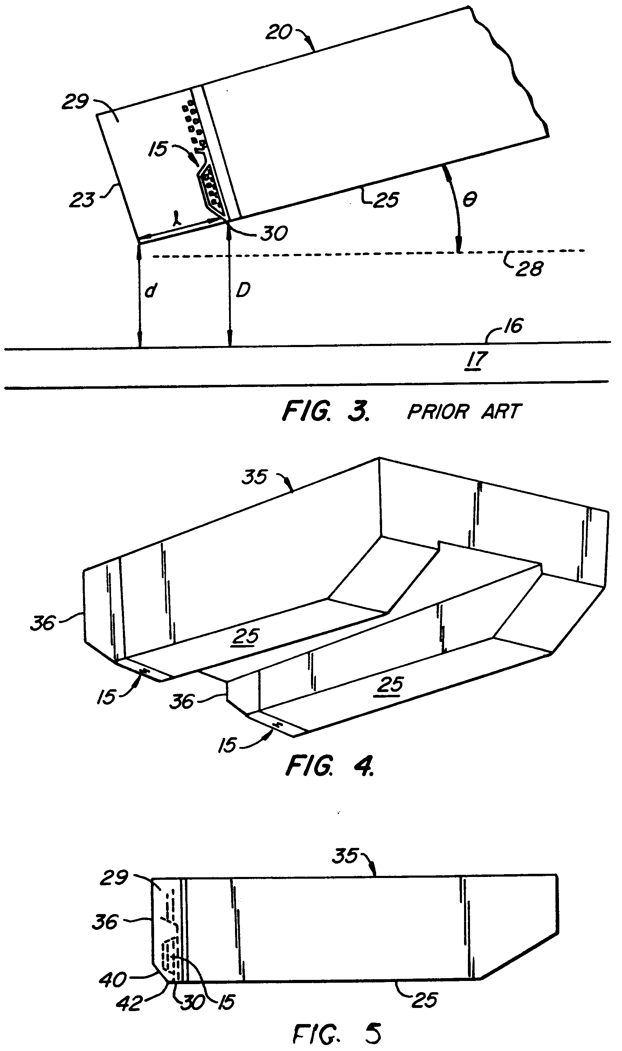

With reference to Fig. 2, when the disk 17 is rotating so that the media surface 16 passes underneath slider body 20 in the direction of the arrow shown in this Fig., the slider flies above the surface 16 of the disk 17 in the angled attitude illustrated. The leading end 21 of the slider body 20 is elevated at a greater distance over the surface 16 of the disk 17 than the trailing end 22. The distanced of the lower corner edge 24 of the slider 20 above the surface of the disk is termed the "flying height", since this is the closest approach of the air bearing surface 25 to the recording surface 16.

Fig. 3 is an enlarged detail view taken after Fig. 2 and illustrates the difference between the flying height d of the slider and the effective flying height D of the transducer 15 above the recording surface 16. As seen in this Fig., the air bearing surface 25 is inclined at an angle $\theta$ with respect to a horizontal plane parallel to the recording surface 16. As will be appreciated by those skilled in the art, the horizontal axis depicted with broken lines 28 is an approximation, since the actual recording surface 16 is not perfectly smooth. The transducer 15 is covered with an overcoat layer 29 formed to a thickness 1 measured between the trailing end surface 23 and the gap 30 of transducer 15. The thickness 1 of the overcoat layer 29 in typical batch processed transducers is on the order of about 1,000 micro inches (40 microns). The effective flying height D of the transducer gap 30 above the recording surface layer 16 is given by the expression:

$$D = d + 1 \sin \theta$$

Consequently, in the prior art configuration the effective flying height of the transducer gap 30 above the recording layer surface 16 is a function of the thickness of the overcoat layer 29. The effective flying height D may be reduced by decreasing the thickness 1 of the overcoat layer 29. However, if the overcoat layer 29 is made too thin, the mechanical protection afforded by this layer to the delicate transducer structure is substantially reduced.

Figs. 4 and 5 illustrate a first embodiment of the invention which can significantly reduce the effective flying height D without impairing the ability of the overcoat layer 29 to provide mechanical and abrasion protection to the transducer 15. As seen in these Figs., a two rail slider body 35 includes a pair of transducers 15 formed adjacent the trailing end surface of the slider body 35. The overcoat layer 29 may be as thick as prior art overcoat layers or a thinner version reduced in thickness to an amount less than that of prior art devices but still adequate to provide mechanical and abrasion protection for the transducer 15. In addition, an angled substantially planar surface 40 is provided extending from the trailing end surface 36 to the air bearing surface 25. The surface 40 is angled in such a manner that the boundary 42 between surface 40 and air bearing surface 25 lies closely adjacent the transducer gap 30, preferably within the region defined by a first plane passing through the gap 30 and normal to the air bearing surface 25 and a second plane tangent to the top surface of the top pole of transducer 15 and normal to the air bearing surface 25. The magnitude of this region may vary typically from around 15 microns to about 40 microns. Angled surface 40 may be readily provided during batch fabrication of transducer/slider assemblies by first lapping surface 36 to the desired thickness and then tilting slider body 35 at the requisite angle and continuing the lapping process to develop surface 40. In the actual manufacturing process, a multiplicity of transducer/slider assemblies are formed on a wafer substrate, and the overcoat layer covering the entire surface is lapped. Next, the wafer is cut into row bars each containing several transducer/slider assemblies. Then, the individual row bars are attached to a transfer tool and the ABS rails are shaped. Thereafter, the bar is tilted by means of the transfer tool and the angled surface 40 is lapped. Alternatively, the individual transducer/slider assemblies may be separated before lapping the angled surface 40, if desired.

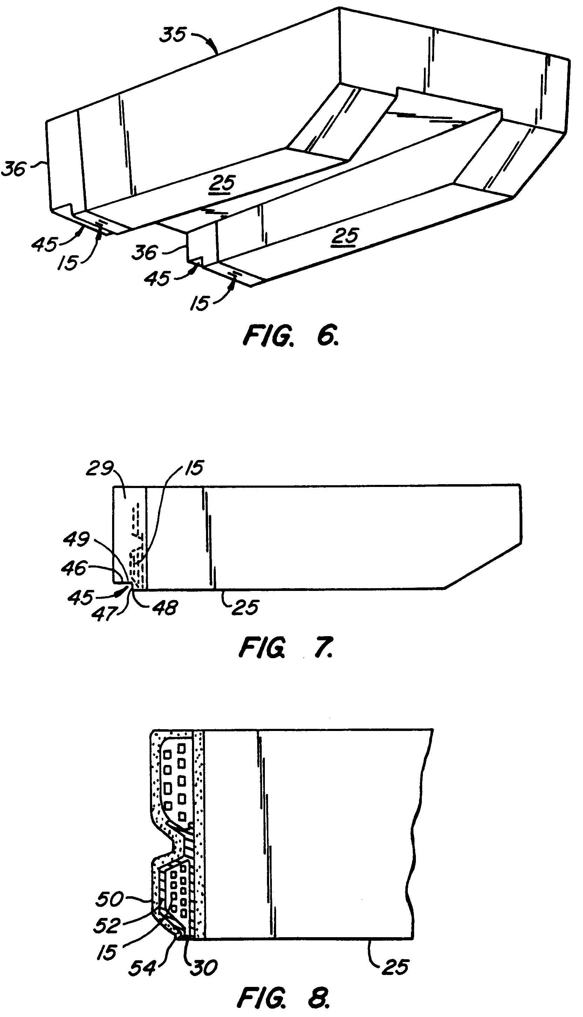

Figs. 6 and 7 illustrate another embodiment of the invention in which the beveled surface 40 is replaced by a notch 45 having a horizontal leg 46, and a vertical leg 47 terminating at a boundary 48 with the air bearing surface 25. Notch 45 extends transversely of the air bearing surface 25 and the corner 49 of notch 45 is positioned preferably in the region between the top surface of the top pole of the transducer 15 and the top surface of the top pole in the pole tip region. Notch 45 may be cut into the overcoat layer 29 by lapping, scribing, ion milling or laser etching.

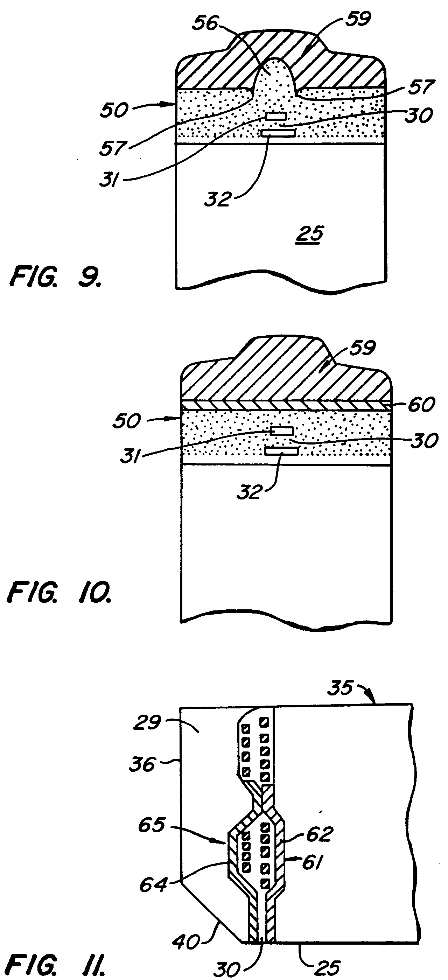

Fig. 8 illustrates another alternate embodiment of the invention employing a thin overcoat layer 50. In this embodiment, the final step in the batch fabrication of the transducer 15 is the provision of a thin overcoat layer 50 which covers the top surface of the transducer including the top pole layer 52 to a thickness on the order of about 15 to 20 microinches. That portion of the thin overcoat layer 50 which covers the pole tip region 30 of transducer 15 is finished by lapping or one of the other techniques noted above to bring the boundary 54 between the air bearing surface 25 and the rear surface of the assembly close to the pole tip region 30.

Fig. 9 illustrates the contours of the overcoat layer 50 prior to the finishing step. As seen in Fig. 9, that portion of the overcoat layer 50 which overlies the pole tip region 30 has a central raised portion 56 and a pair of flanking low points 57. A background portion 59 covers the remainder of the transducer 15 top surface. The raised central portion 56 is an inevitable consequence of the requirement that the upper pole tip 31 be covered to some minimum depth (on the order of 15 to 25μ) in order to provide adequate mechanical and abrasion protection to the pole tip 31. Although this embodiment can be used in some applications without further refinement, the following procedure is believed to provide a transducer/slider assembly with superior flying characteristics. After the overcoat layer has been formed as shown in Fig. 9 (which is a view from the underside of the air bearing surface 25), the overcoat layer 50 is lapped at an appropriate angle (say 45°) in order to remove the irregular line contour, illustrated in Fig. 9 and provide the smooth band 60 shown in Fig. 10.

Fig. 11 illustrates another embodiment of the invention. As seen in this Fig., a magnetic transducer 15 has a bottom pole 61 with a central section 62 displaced from the pole tip region 30 in the opposite direction from the center section 64 of top pole 65. The rear surface 36 of the trailing end is beveled at the lower corner to form the angled substantially planar surface 40 in the overcoat layer 29 in a manner essentially identical to the embodiment of Figs. 4 and 5. The structure of the lower pole 61 resembles that shown in commonly assigned U.S. Patent No. 4,489,105 issued December 18, 1984 for "METHOD OF MAKING A THIN FILM TRANSDUCER", and the techniques used to form the lower pole disclosed therein may be employed for the embodiment of Fig. 11.

As will now be apparent, the invention provides a simple technique for reducing the effective flying height of the transducer gap 30 above the surface of the recording element which adds essentially only one step to the entire manufacturing process and which can be readily implemented using existing lapping, ion milling, scribing or laser etching equipment and techniques presently used in the batch fabrication of transducer/slider assemblies. Consequently, the invention can be implemented at relatively low cost in existing manufacturing operations. In addition, the invention requires no specially designed air bearing rails or rail contours such as those encountered in the prior art identified above, which further reduces the cost and complexity of improving the flying height.

While the above provides a full and complete disclosure of the preferred embodiments of the invention, various modifications, alternate constructions and equivalents may be employed as desired. For example, while the invention has been described with reference to a magnetic transducer, the principles apply with equal force to other types of transducers used in conjunction with flying sliders and moveable media. Also, while specific magnetic transducers have been illustrated, other types of magnetic transducers - for example a magnetorestrictive (MR) transducer, such as that illustrated in U.S. Patent No. 4,489,484 issued December 25, 1984 for "METHOD OF MAKING THIN FILM MAGNETIC RECORDING HEADS" - may be used with the invention. Further, while the invention has been described and illustrated in Fig. 1 in conjunction with a perpendicular arm assembly, the in-line type of assembly may be used as well. Therefore, the above description and illustrations should not be construed as limiting the invention, which is defined by the appended claims.

## Claims

1. A slider/transducer assembly comprising a slider body and a transducer, said slider body having a leading end, a trailing end, and an air bearing surface located intermediate the leading end and the trailing end, the trailing end having a contoured surface portion forming a boundary with the air bearing surface, said transducer having a transducing region located adjacent the trailing end, said boundary being located closely adjacent the transducing region.

2. The invention of claim 1 wherein said contoured surface portion comprises a substantially planar surface portion extending from the boundary at an angle with respect to said air bearing surface.

3. The invention of claim 1 wherein said contoured surface portion comprises a notch extending rearwardly of said boundary.

4. The invention of claim 1 wherein said contoured surface portion comprises a thin overcoat layer formed over said transducer, said contoured surface portion including a substantially planar angled sub-portion extending rearwardly of said boundary at an angle with respect to said air bearing surface.

5. The invention of claim 1 wherein said transducer comprises a magnetic transducer including a top pole having a main body portion with an upper surface and a bottom pole, each pole having a pole tip, said pole tips defining a pole tip region spaced from the upper surface of said top pole main body portion; and wherein said boundary lies between said upper surface and said pole tip region.

6. The invention of claim 5 wherein said bottom pole has a bottom surface spaced from said pole tip region.

7. A transducer/slider assembly comprising a slider body and a magnetic transducer, said slider body having a leading end, a trailing end, and an air bearing surface located intermediate the leading end and the trailing end, said magnetic transducer including top and bottom poles each having a pole tip, said pole tips defining a pole tip region terminating at a portion of said air bearing surface adjacent the trailing end of said slider body, said top pole having a main body region with a top surface portion spaced from said pole tip region, said trailing end of said slider body having an angled surface forming a boundary with said air bearing surface, said boundary lying in a region between said top surface portion and said pole tip region.

8. The invention of claim 7 wherein said bottom pole has a main body region with a bottom surface portion spaced from said pole tip region.

9. A transducer/slider assembly comprising a slider body and a magnetic transducer, said slider body having a leading end, a trailing end and an air bearing surface located intermediate the leading end and the trailing end, said magnetic transducer including top and bottom poles each having a pole tip, said pole tips defining a pole tip region terminating at a portion of said air bearing surface adjacent the trailing end of said slider body, said top pole having a main body region with a top surface portion spaced from said pole tip region, said trailing end of said slider including a contoured surface forming a boundary with said air bearing surface, said boundary lying in a region between said top surface portion and said pole tip region.

10. The invention of claim 9 wherein said contoured surface includes a thin overcoat layer overlying said top pole; and wherein that portion of said thin overcoat layer covering the top pole tip includes an angled portion terminating at said boundary.

11. The invention of claim 9 wherein said bottom pole has a main body region with a bottom surface portion spaced from said pole tip region.

12. A transducer/slider assembly comprising a slider body and a magnetic transducer, said slider body having a leading end, a trailing end, and an air bearing surface located intermediate the leading end and the trailing end, said magnetic transducer including top and bottom poles each having a pole tip, said pole tips defining a pole tip region terminating at a portion of said air bearing surface adjacent the trailing end of said slider body, said top pole having a main body region with a top surface portion spaced from said pole tip region, said trailing end of said slider body comprising an end surface and a notch extending from said end surface to said boundary, said boundary lying in a region between said top surface portion and said pole tip region.

13. The invention of claim 12 wherein said bottom pole has a main body region with a bottom surface portion spaced from said pole tip region.

14. A magnetic disk recording system comprising:
    a magnetic recording medium having a recording surface;
    a slider/transducer assembly comprising a slider body and a transducer;
    head arm means for supporting said slider/transducer assembly with said transducer closely adjacent the recording surface of the said magnetic recording medium:
    accessing means for supporting said head arm means and for moving said head arm means relative to the recording surface of said magnetic recording medium,
    said slider body having a leading end, a trailing end, and an air bearing surface located intermediate the leading end and the trailing end, the trailing end having a contoured surface portion forming a boundary with the air bearing surface,
    said transducer having a transducing region located adjacent the trailing end, said boundary being located closely adjacent the transducing region.

15. The invention of claim 14 wherein said contoured surface portion comprises a substantially planar surface portion extending from the boundary at an angle with respect to said air bearing surface.

16. The invention of claim 14 wherein said contoured surface portion comprises a notch extending rearwardly of said boundary.

17. The invention of claim 14 wherein said contoured surface portion comprises a thin overcoat layer formed over said transducer, said contoured surface portion including a substantially planar angled sub-portion extending rearwardly of said boundary at an angle with respect to said air bearing surface.

18. The invention of claim 14 wherein said transducer comprises a magnetic transducer including a top pole having a main body portion with an upper surface and a bottom pole, each pole having a pole tip, said pole tips defining a pole tip region spaced from the upper surface of said top pole main body portion; and wherein said boundary lies between said upper surface and said pole tip region.

19. The invention of claim 18 wherein said bottom pole has a bottom surface spaced from said pole tip region.

20. A transducer assembly for a recording device wherein the edge of the transducer assembly which in use of the assembly is closest to the recording surface is profiled so as to enable the height of the transducer assembly above the recording surface to be reduced.

**FIG. I.**

**FIG. 2.** PRIOR ART

**FIG. 3.** PRIOR ART

**FIG. 4.**

**FIG. 5**

FIG. 6.

FIG. 7.

FIG. 8.

FIG. 9.

FIG. 10.

FIG. 11.

| European Patent Office | EUROPEAN SEARCH REPORT | Application Number EP 94 30 3464 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | PATENT ABSTRACTS OF JAPAN vol. 3, no. 150 (E-158) 11 December 1979 & JP-A-54 131 919 (MITSUBISHI DENKI K.K.) 13 October 1979 * abstract * | 1,2 | G11B5/60 G11B17/32 G11B21/21 |
| X | PATENT ABSTRACTS OF JAPAN vol. 15, no. 331 (P-1241) 22 August 1991 & JP-A-03 120 677 (TDK CORP.) 22 May 1991 * abstract * | 20 | |
| X | US-A-5 166 845 (THOMPSON H.E.) * column 7, line 13 - column 8, line 44; figures 1-5 * | 3 | |
| X | PATENT ABSTRACTS OF JAPAN vol. 11, no. 252 (P-605) (2699) 15 August 1987 & JP-A-62 057 119 (FUJUTSU LTD.) 12 March 1987 | 20 | |
| A | * abstract * | 7,9,12, 14 | TECHNICAL FIELDS SEARCHED (Int.Cl.5) G11B |
| X | EP-A-0 129 336 (MINNESOTA MINING AND MANUFACTURING COMPANY) * abstract; figures 1,3 * | 20 | |
| X | US-A-5 200 869 (MATSUZAKI M.) | 1,5,6,9, 11,14, 18-20 | |
| A | * column 1, line 36 - column 2, line 11; figure 12 * * column 4, line 64 - column 5, line 23; figures 2,3 * | 7 | |

-/--

The present search report has been drawn up for all claims

| Place of search | Date of completion of the search | Examiner |
|---|---|---|
| BERLIN | 8 September 1994 | Deane, E |

EP 0 627 732 A1

European Patent
Office

**EUROPEAN SEARCH REPORT**

Application Number

EP 94 30 3464

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | DE-A-37 14 787 (SIEMENS AG)<br><br>* column 3, line 10 - column 3, line 54; figure 1 *<br>--- | 7,10,15, 17 | |
| A | EP-A-0 543 690 (COMMISSARIAT A L'ENERGIE ATOMIQUE)<br>* column 5, line 1 - line 26; figure 7 *<br>--- | 3 | |
| A | PATENT ABSTRACTS OF JAPAN<br>vol. 17, no. 454 (P-1596) 19 August 1993<br>& JP-A-05 101 323 (TDK CORP.) 23 April 1993<br>* abstract *<br>----- | 7,9,12, 14 | |

TECHNICAL FIELDS
SEARCHED     (Int.Cl.5)

The present search report has been drawn up for all claims

| Place of search | Date of completion of the search | Examiner |
|---|---|---|
| BERLIN | 8 September 1994 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

13